# EUROPEAN PATENT APPLICATION

(11) **EP 3 432 453 A1**
(43) Date of publication of application: **23.01.2019**
(21) Application number: 18184750.0
(22) Date of filing: 20.07.2018
(51) Int. Cl.: H02K 7/04, H02K 15/16

(54) **BLOWING DEVICE AND CLEANER**

(30) Priority: 21.07.2017 JP 2017142252
(71) Applicant: Nidec Corporation, Kyoto-shi, Kyoto 601-8205 (JP)
(72) Inventor: SHIOZAWA, Kazuhiko, Minami-ku, Kyoto 601-8205 (JP); HAYAMITSU, Ryosuke, Minami-ku, Kyoto 601-8205 (JP)
(74) Representative: Stöckeler, Ferdinand

(57) **Abstract**

A blowing device (A) includes an impeller (20) capable of rotating about a central axis (C); a motor (10) disposed below the impeller (20) in a central axis direction and rotating the impeller (20); and a motor housing (30) surrounding the motor (10). The motor housing (30) includes a motor housing top plate (31) expanding in a direction orthogonal to the central axis (C) and facing a lower surface of the impeller (20), and a motor housing cylindrical portion (32) extending downwardly in the axial direction from an outer edge of the motor housing top plate (31) in a radial direction. A top plate recess portion (313) extending from the outer edge of the motor housing top plate (31) in the radial direction to an inside in the radial direction and recessed downwardly is formed on an upper surface of the motor housing top plate (31).

## Description

### Field of the Invention

The present invention relates to a blowing device and a cleaner including a blowing device.

### Description of the Related Art

In general, since an electric blowing device (blowing device) used for an electric cleaner or the like rotates at a high speed, vibration tends to occur due to imbalance of a rotating portion. Therefore, an electric blowing device (blowing device) capable of eliminating imbalance of the rotating portion is disclosed in Japanese Unexamined Patent Application Publication No. 2003-129995.

The electric blowing device of Japanese Unexamined Patent Application Publication No. 2003-129995 includes a rotary fan and a ring-shaped imbalance member of which a mass distribution is asymmetric. The imbalance member penetrates a rotation shaft at an appropriate position on an outer peripheral surface of the rotation shaft and is mounted in a phase opposite to that of an imbalance position of a rotor. Therefore, it is claimed that a decrease in an initial imbalance amount of the rotor is achieved.

### SUMMARY OF THE INVENTION

However, the inventors recognized that the electric blowing device disclosed in Japanese Unexamined Patent Application Publication No. 2003-129995 has a problem that it is difficult to correct imbalance efficiently.

A blowing device according to an exemplary embodiment of the invention includes an impeller capable of rotating about a central axis extending vertically; a motor that is disposed below the impeller in a direction of the central axis and rotates the impeller; and a motor housing surrounding the motor. The motor housing includes a motor housing top plate that expands in a direction orthogonal to the central axis and faces a lower surface of the impeller in an axial direction, and a motor housing cylindrical portion that extends downwardly in the axial direction from an outer edge of the motor housing top plate in a radial direction. Atop plate recess portion, which extends from the outer edge of the motor housing top plate in the radial direction to an inside in the radial direction and is recessed downwardly, is formed on an upper surface of the motor housing top plate.

The above and other elements, features, steps, characteristics and advantages of the present disclosure will become more apparent from the following detailed description of the preferred embodiments with reference to the attached drawings.

### BRIEF DESCRIPTION OF THE DRAWINGS

Fig. 1 is a perspective view of a cleaner according to an embodiment;
Fig. 2 is a perspective view of a blowing device according to the embodiment;
Fig. 3 is a vertical sectional view of the blowing device illustrated in Fig. 2;
Fig. 4 is an exploded perspective view of the blowing device illustrated in Fig. 2;
Fig. 5 is a perspective view of a motor housing and a stator core as viewed from below;
Fig. 6 is a perspective view of the motor housing as viewed from above;
Fig. 7 is a perspective view of the motor housing as viewed from below;
Fig. 8 is a perspective view of an impeller;
Fig. 9 is an enlarged sectional view of a cross section (cross section including a central axis C) along a radial direction of the motor housing and a circumferential portion of the impeller;
Fig. 10 is a perspective view of the blowing device in a state where an impeller cover is removed;
Fig. 11 is s side view of the blowing device illustrated in Fig. 10;
Fig. 12 is a schematic sectional view of a state where balance adjustment of the impeller is performed;
Fig. 13 is a plan view of the impeller;
Fig. 14 is a plan view illustrating a modification example of a top plate recess portion;
Fig. 15 is a sectional view of the top plate recess portion in a circumferential direction; and
Fig. 16 is an enlarged sectional view of a cross section (cross section including a central axis C) along a radial direction of the motor housing.

### DETAILED DESCRIPTION OF THE PREFERRED EMBODIMENTS

Hereinafter, exemplary embodiments of the invention will be described in detail with reference to the drawings. In this specification, in a blowing device A, a direction parallel to a central axis C of the blowing device A is referred to as an "axial direction", a direction orthogonal to the central axis C of the blowing device A is referred to as a "radial direction", and a direction along a circular arc with the central axis C of the blowing device A as a center is referred to as a "circumferential direction". Similarly, also with respect to an impeller 20, in a state of being incorporated in the blowing device A, respective directions coinciding with the axial direction, the radial direction, and the circumferential direction of the blowing device A are simply referred to as an "axial direction", a "radial direction", and a "circumferential direction". In addition, in this specification, in the blowing device A, a shape and a positional relationship of each portion will be described with the axial direction as a vertical direction, and an intake port 43 side of an impeller cover 41 with respect to the impeller 20 as an upper side. The vertical direction is simply used for explanation and does not limit a positional relationship and direction in a use state of the blowing device A. In addition, an "upstream side" and a "downstream side" respectively indicate upstream and downstream in a flowing direction of air drawn from the intake port 43 when the impeller 20 is rotated.

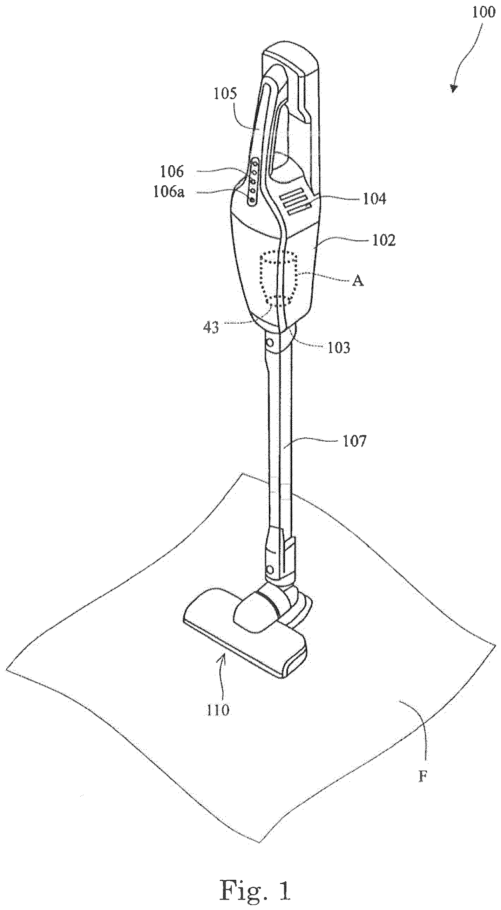

In this specification, in a cleaner 100, the shape and the positional relationship of each portion will be described with a direction approaching a floor surface F (surface to be cleaned) of Fig. 1 as "downward" and a direction away from the floor surface F as "upward". These directions are merely used for explanation and do not limit the positional relationship and the directions in the use state of the cleaner 100. In addition, the "upstream" and the "downstream" respectively indicate upstream and downstream in the flowing direction of the air drawn from an intake portion 103 when the blowing device A is driven.

The cleaner of the exemplary embodiment of the invention will be described below. Fig. 1 is a perspective view of the cleaner according to the embodiment. The cleaner 100 is a so-called stick type electric cleaner and includes a casing 102 in which the intake portion 103 and an exhaust portion 104 are respectively opened to a lower surface and an upper surface. A power supply cord (not illustrated) is led out from a back surface of the casing 102. The power supply cord is connected to a power supply outlet (not illustrated) provided on a side wall surface of a living room or the like, and supplies power to the cleaner 100. Moreover, the cleaner 100 may be a so-called robot type, canister type, or handy type electric cleaner.

An air passage (not illustrated) for connecting the intake portion 103 and the exhaust portion 104 is formed in the casing 102. A dust collecting portion (not illustrated), a filter (not illustrated), and the blowing device A are disposed in order from the upstream side to the downstream side in the air passage. Trash such as dust contained in the air circulating through the air passage is shielded by the filter and is collected in the dust collecting portion formed in a container shape. The dust collecting portion and the filter are configured to be attachable and detachable to and from the casing 102.

A grip portion 105 and an operation portion 106 are provided on an upper portion of the casing 102. A user can grasp the grip portion 105 and move the cleaner 100. The operation portion 106 has a plurality of buttons 106a and operation setting of the cleaner 100 is performed by operating the buttons 106a. For example, a driving start, a driving stop, a change in a rotational speed, and the like of the blowing device A are instructed by operations of the buttons 106a. A cylindrical suction pipe 107 is connected to the intake portion 103. A suction nozzle 110 is detachably attached to the suction pipe 107 at an upstream end (lower end in the drawing) of the suction pipe 107.

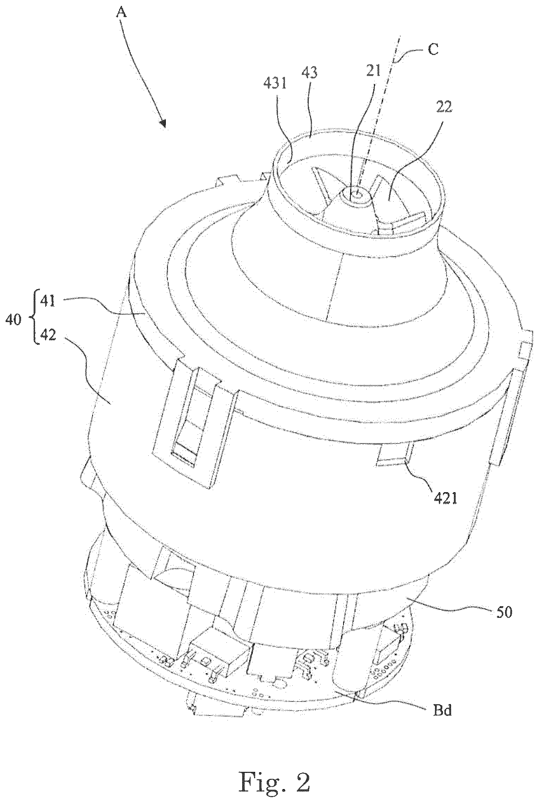

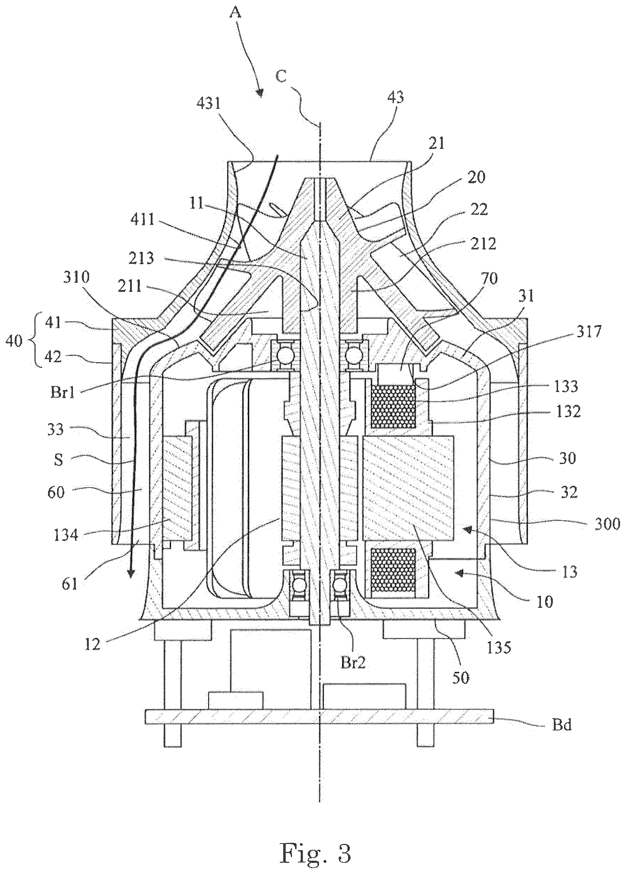

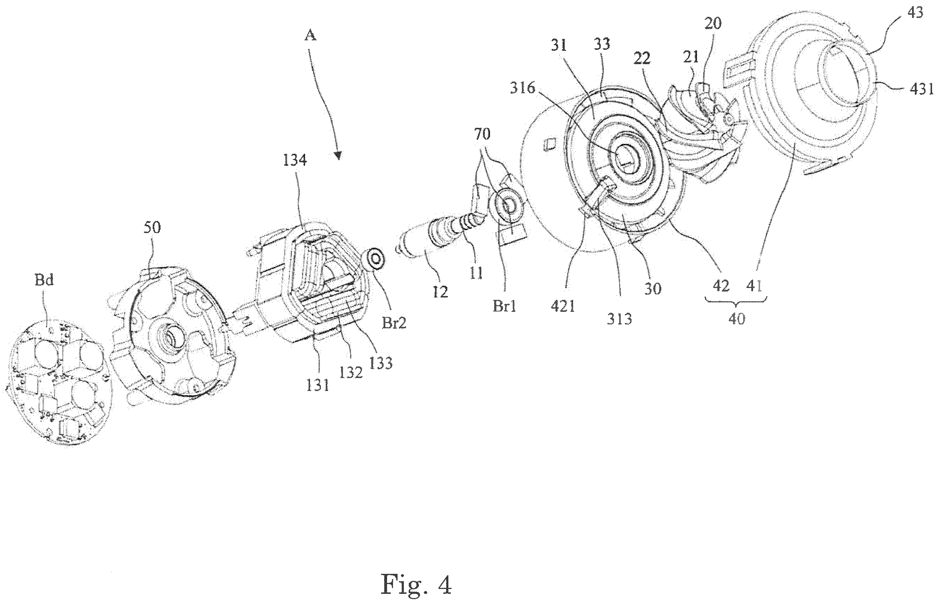

Fig. 2 is a perspective view of the blowing device according to the embodiment. Fig. 3 is a vertical sectional view of the blowing device illustrated in Fig. 2. Fig. 4 is an exploded perspective view of the blowing device illustrated in Fig. 2. The blowing device A is mounted on the cleaner 100 to suck the air.

The blowing device A includes a motor 10, the impeller 20, a motor housing 30, a blower housing 40, a cover member 50, an intermediate member 70, and a board Bd.

The impeller 20 and the motor housing 30 are stored in an inside of the blower housing 40. As illustrated in Fig. 3, a flow path 60 is formed in a gap between the blower housing 40 and the motor housing 30. The flow path 60 communicates with the impeller cover 41 which is described later at an upper end (upstream end) and an exhaust port 61 is formed at a lower end (downstream end) of the flow path 60.

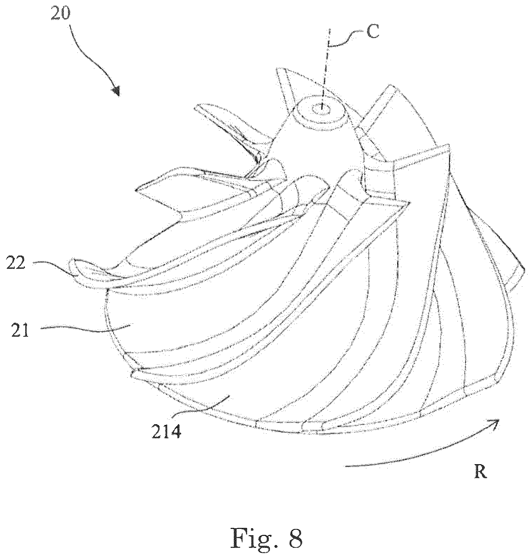

The motor 10 connected to the impeller 20 is stored in the motor housing 30. The impeller 20 rotates about the central axis C extending vertically. The motor 10 is disposed below the impeller 20 to rotate the impeller 20. That is, the impeller 20 is rotated by the rotation of the motor 10 around the central axis C extending vertically in a rotation direction R (see Fig. 8 described later). That is, the impeller 20 capable of rotating about the central axis C extending vertically and the motor 10 which is disposed below the impeller 20 in the direction of the central axis to rotate the impeller 20. An airflow generated by rotation of the impeller 20 is discharged from the exhaust port 61 through the flow path 60.

As illustrated in Fig. 3, the motor 10 stored in the motor housing 30 is disposed below the impeller 20. That is, the motor housing 30 surrounds the motor 10. The motor 10 is a so-called inner rotor type motor. The motor 10 includes a shaft 11, a rotor 12, and a stator 13.

The shaft 11 has a cylindrical shape. As illustrated in Fig. 3, the shaft 11 penetrates a through-hole 316 provided in a motor housing top plate 31 of the motor housing 30, which is described later. The impeller 20 is fixed to an end portion of the shaft 11 protruding from the motor housing top plate 31. The shaft 11 is rotatably supported by an upper bearing Br1 and a lower bearing Br2.

The upper bearing Br1 and the lower bearing Br2 are ball bearings. The shaft 11 is fixed to inner races of the upper bearing Br1 and the lower bearing Br2. For fixing, means such as adhesion insertion or press fitting is adopted. An outer ring of the upper bearing Br1 is fixed to the motor housing 30 and an outer ring of the lower bearing Br2 is fixed to the cover member 50. Moreover, the upper bearing Br1 and the lower bearing Br2 are not limited to ball bearings. At least a part of the upper bearing Br1 is disposed in a lower surface recess portion 211 of the impeller 20, which is described later. Therefore, lengths of the upper bearing Br1 and the lower bearing Br2 in the axial direction can be increased. In addition, the upper bearing Br1 can be disposed close to a boss portion 212 of the impeller 20, which is described later. Therefore, deformation such as deflection of the shaft 11 when the impeller 20 rotates can be suppressed.

The rotor 12 is fixed to the shaft 11. The rotor 12 has a plurality of magnets (not illustrated). The plurality of the magnets are fixed to an outer peripheral surface of the shaft 11. In the plurality of the magnets, a magnetic pole surface of an N pole and a magnetic pole surface of an S pole are alternately arranged.

Moreover, instead of the plurality of the magnets, a single annular magnet may be used. In this case, in the magnet, the N pole and the S pole may be alternately magnetized in the circumferential direction. In addition, the magnet and a rotor housing may be integrally molded with resin mixed with magnetic powder.

The stator 13 is disposed on an outside of the rotor 12 in the radial direction. The stator 13 includes a stator core 131, an insulator 132, and a coil 133. The stator core 131 is a laminated body in which electromagnetic steel plates are laminated in the axial direction (vertical direction in Fig. 3). Moreover, the stator core 131 is not limited to the laminated body in which the electromagnetic steel plates are laminated and, for example, may be a single member such as powder calcination or casting.

The stator core 131 has an annular core back 134 and a plurality of teeth 135. The plurality of the teeth 135 extend inwardly in the radial direction from an inner peripheral surface of the core back 134 toward the magnet (not illustrated) of the rotor 12. Therefore, the plurality of the teeth 135 are disposed in the circumferential direction. The coil 133 is formed by winding a conductive wire around each of the teeth 135 via the insulator 132.

Moreover, the motor 10 is a brushless motor. The brushless motor is driven by a current divided into three systems (hereinafter, referred to as three phases) having different supply timings. The coil 133 and the magnet of the rotor 12 attract or repel each other by supplying a current to a plurality of the coils 133 at a determined timing, so that the rotor 12 rotates. The motor 10 is, for example, a high-revolution type motor capable of rotating at a revolution number of 100,000 revolutions per minute or more. Normally, in the motor 10, the smaller the number of the coils 133, the more advantageous for highspeed rotation. The motor 10 is controlled with a three-phase current. Therefore, in the motor 10, the number of the coils 133 and the teeth 135 in which the coils 133 are disposed is three. That is, the motor 10 is a three-phase and three-slot motor. Moreover, three teeth 135 are disposed with equal intervals in the circumferential direction in order to be rotated in a balanced manner.

In the stator core 131, an inner peripheral surface and an outer peripheral surface of the core back 134 are flat surfaces in the vicinity of a base of the teeth 135. Therefore, it is possible to effectively utilize a winding space. In addition, loss can be reduced by shortening a magnetic path. In addition, it is possible to prevent winding collapse of the coil 133 while preventing disturbance of a magnetic distribution. In addition, the inner peripheral surface and the outer peripheral surface of the core back 134 other than the vicinity of the base of the teeth 135 are curved. The curved portion of the core back 134 is in contact with an inner surface of the motor housing 30. In this case, the curved portion may be press-fitted to the inner surface of the motor housing 30. Moreover, the press-fitting may be a so-called interference fitting, or light fitting, which is a so-called intermediate fitting in which a force due to press fitting is weaker than that of the interference fitting. Moreover, the core back 134 may have a cylindrical shape without a flat surface. In this case, the cylindrical outer surface is press-fitted into the motor housing 30. Moreover, the core back 134 and the motor housing 30 may be fixed by another method such as insertion bonding.

A lead wire (not illustrated) is connected to the coil 133. One end of the lead wire is connected to a drive circuit (not illustrated) on the board Bd disposed below the blower housing 40. Therefore, power is supplied to the coil 133.

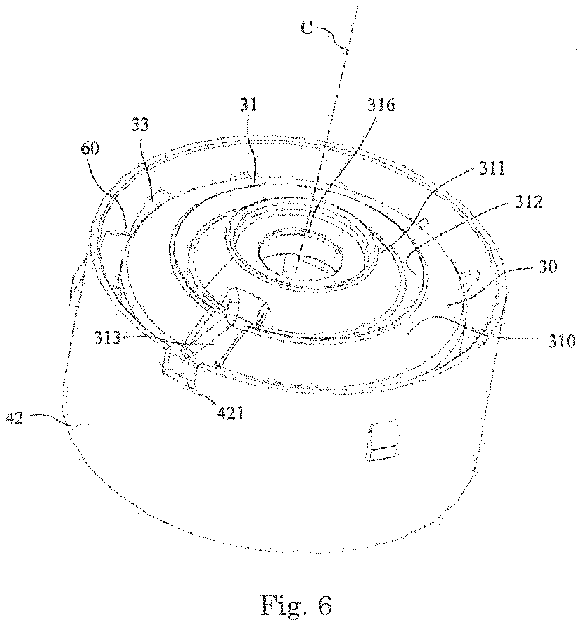

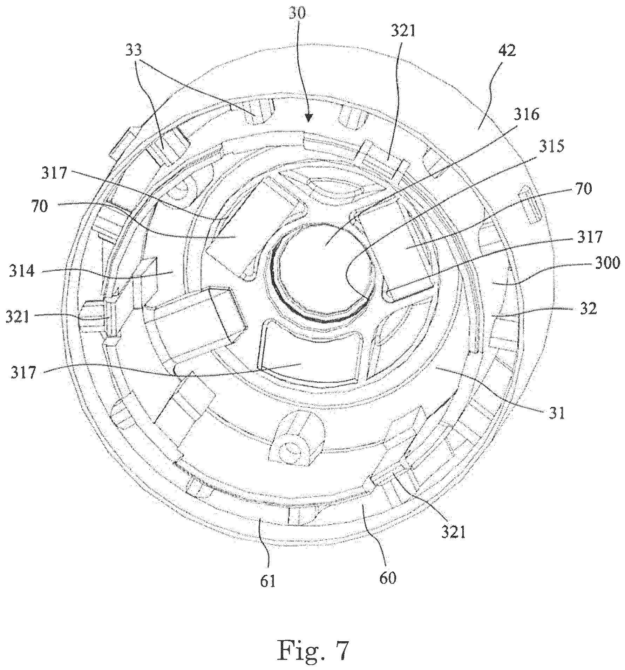

Fig. 6 is a perspective view of the motor housing as viewed from above. Fig. 7 is a perspective view of the motor housing as viewed from below. As illustrated in Figs. 3, 5, 7, and the like, the motor housing 30 covers an outside of the motor 10 in the radial direction. The motor housing 30 includes the motor housing top plate 31 and a motor housing cylindrical portion 32. The motor housing top plate 31 expands in a direction orthogonal to the central axis. The motor housing top plate 31 has a circular shape as viewed from the axial direction. The motor housing cylindrical portion 32 extends downwardly in the axial direction from an outer edge in the radial direction of the motor housing top plate 31. The motor housing top plate 31 and the motor housing cylindrical portion 32 are a molded body which is integrally formed. The motor housing 30 can be made of metal, resin, or the like.

Here, in a case where the motor housing 30 is made of metal, a metal configuring the motor housing 30 can be, for example, an aluminum alloy or a magnesium alloy. The aluminum alloy and the magnesium alloy are easy to mold, lightweight, and inexpensive compared to other metals.

The motor housing top plate 31 includes a top plate upper surface 310. The top plate upper surface 310 faces the lower surface of the impeller 20 in the axial direction. That is, the motor housing top plate 31 expands in a direction orthogonal to the central axis and faces the lower surface of the impeller 20 in the axial direction. The top plate upper surface 310 includes a first top plate inclination surface 311 and a second top plate inclination surface 312. The first top plate inclination surface 311 has a conical shape inclined inwardly toward an upper side along the axis. That is, the upper surface of the motor housing top plate 31 includes the first top plate inclination surface 311 inclined inwardly toward the upper side. In addition, the second top plate inclination surface 312 has a conical shape inclined outwardly toward the upper side along the axis. That is, the upper surface of the motor housing top plate 31 includes the second top plate inclination surface 312 inclined outwardly toward the upper side. The first top plate inclination surface 311 and the second top plate inclination surface 312 are connected at lower end portions in the axial direction. That is, the motor housing top plate 31 includes an annular recess portion. The annular recess portion is substantially V-shaped which is recessed downwardly.

In addition, the top plate upper surface 310 includes a top plate recess portion 313. The top plate recess portion 313 extends from an outer edge in the radial direction to the inside in the radial direction of the top plate upper surface 310. Details of the top plate recess portion 313 will be described later.

The motor housing top plate 31 includes a top plate facing portion 314 facing the rotor 12 and the stator 13 of the motor 10 in the axial direction. The top plate facing portion 314 is a lower surface of the motor housing top plate 31. The top plate facing portion 314 includes a center recess portion 315 which is recessed upwardly at a center portion and the through-hole 316 penetrating in the axial direction. The outer ring of the upper bearing Br1 is fixed to the center recess portion 315. The shaft 11 penetrates the through-hole 316. The central axes of the center recess portion 315 and the through-hole 316 coincide. In addition, the top plate facing portion 314 includes a facing recess portion 317 which is recessed upwardly. The intermediate member 70 is inserted into the facing recess portion 317. The top plate facing portion 314 includes three facing recess portions 317 and the three facing recess portions 317 are disposed with equal intervals in the circumferential direction around the central axis C. Moreover, as will be described in detail later, the facing recess portion 317 is disposed at a position overlapping with the coil 133, that is, the teeth 135 in the axial direction when the stator core 131 is fixed to the motor housing 30.

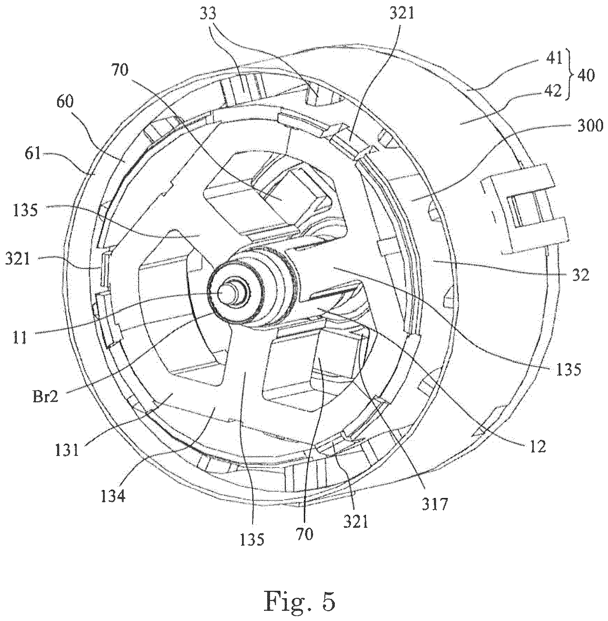

The motor housing cylindrical portion 32 is cylindrical. An upper end portion of the motor housing cylindrical portion 32 in the axial direction is connected to the motor housing top plate 31. That is, the motor housing 30 has a bottomed cylindrical shape of which a lower side is opened. The stator core 131 is press-fitted to the inner peripheral surface of the motor housing top plate 31. In addition, the motor housing cylindrical portion 32 includes an axial direction contact portion 321 at a lower portion thereof. The axial direction contact portion 321 protrudes inwardly in the radial direction. As illustrated in Figs. 3 and 5, the axial direction contact portion 321 is in contact with a lower end surface of the stator core 131 in the axial direction to suppress a downward movement of the stator core 131. The intermediate member 70 is disposed between the upper side of the stator 13 in the radial direction and the top plate facing portion 314. The stator 13 is pressed downwardly in the axial direction by an elastic force of the intermediate member 70. The axial direction contact portion 321 applies a force to the stator 13 in a direction opposite to a direction of the elastic force from the intermediate member 70.

In addition, as illustrated in Fig. 5, the motor 10 includes a plurality of the axial direction contact portions 321. More specifically, three axial direction contact portions 321 are provided at positions overlapping portions of the stator core 131 of the motor housing cylindrical portion 32, which are in contact with the motor housing 30. The three axial direction contact portions 321 are disposed with equal intervals in the circumferential direction, so that a force can be applied from the axial direction contact portion 321 to the stator core 131. Therefore, a uniform or substantially uniform force can be applied to the stator core 131 in the circumferential direction.

Moreover, the axial direction contact portion 321 may be in contact with a surface facing downwardly the stator core 131 in the axial direction and is not limited to a simple surface. In addition, the axial direction contact portion 321 is in contact with the stator core 131, but it is not limited thereto. For example, in a case where the insulator 132 or the coil 133 has sufficient strength, the axial direction contact portion 321 may be in contact with the insulator 132 or the coil 133.

In addition, the axial direction contact portion 321 protrudes inwardly in the radial direction in advance, and may have a shape to be pressed by the stator core 131 in the radial direction when the stator core 131, that is, the stator 13 is attached. In addition, after the stator core 131 is attached to the motor housing 30, an entirety or a part of the axial direction contact portion 321 may be bent in the circumferential direction. In addition, it is not limited to bending and the downward movement of the stator core 131 in the axial direction may be suppressed by caulking.

A plurality of stationary blades 33 are provided on an outer peripheral surface 300 of the motor housing 30. The stationary blade 33 is formed in a plate shape and is inclined in a direction opposite to the rotation direction of the impeller 20 toward the upper side. The stationary blade 33 is convexly curved on the impeller 20 side. Outer edges of the plurality of the stationary blades 33 are in contact with the inner surface of the blower housing 40, that is, a lower cover 42. The stationary blades 33 are juxtaposed in the circumferential direction and guide an airflow S downwardly when the blowing device A is driven.

In the embodiment, the stationary blade 33 and the motor housing 30 are an integral member, but the stationary blade 33 and the motor housing 30 may be separate members.

The disk-shaped cover member 50 is disposed below the motor housing 30. The lower surface of the motor housing 30 is covered by attaching the cover member 50. The cover member 50 is fixed to the motor housing 30 by using fixtures such as screws (not illustrated). The cover member 50 is provided with a through-hole through which the lead wire passes. In addition, as illustrated in Figs. 1 and 3, the board Bd is disposed below the cover member 50.

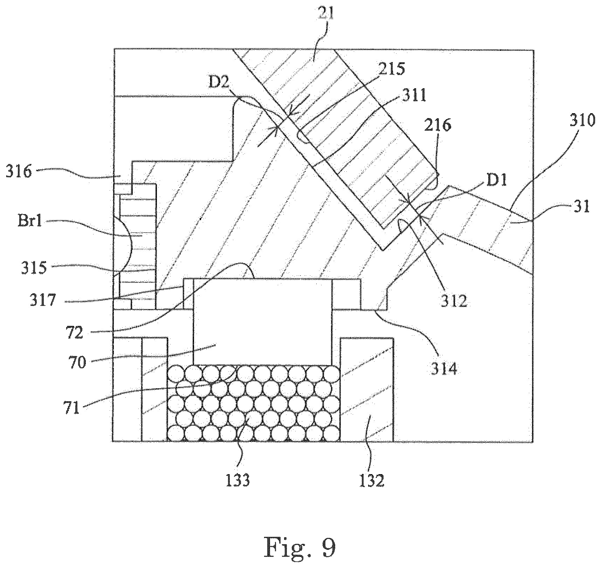

As illustrated in Fig. 9 which is described later, the intermediate member 70 is inserted into the facing recess portion 317 provided in the top plate facing portion 314 of the motor housing top plate 31. The intermediate member 70 includes a first contact portion 71 and a second contact portion 72. The intermediate member 70 is, for example, a heat conduction member made of a material such as silicon resin having a high thermal conductivity (for example, higher than air). In addition, the intermediate member 70 is elastically deformable.

The first contact portion 71 of the intermediate member 70 is in contact with the coil 133 of the stator 13 of the motor 10. Moreover, the first contact portion 71 may be in contact with the stator 13 and is not limited to the coil 133. However, it is preferable that the first contact portion 71 is in contact with the coil 133 which is a heat generation source of the motor 10. Therefore, heat generated by the coil 133 can be efficiently transmitted to the motor housing 30. In addition, the intermediate member 70 only needs to be in contact with the stator 13 and may be in contact with a portion other than the upper surface of the stator 13.

In addition, the second contact portion 72 of the intermediate member 70 is inserted into the facing recess portion 317 and is in contact with the motor housing top plate 31. As described above, the coil 133 is disposed via the motor housing top plate 31 and the intermediate member 70 by providing the intermediate member 70. As described above, since the intermediate member 70 is formed of a material having a high thermal conductivity, heat generated by the coil 133 and the stator core 131 by energization can be transmitted to the motor housing top plate 31 via the intermediate member 70. The motor housing 30 has a larger surface area than that of the stator 13. In addition, since the airflow S generated by the impeller 20 flows along the outer surface of the motor housing 30, a cooling efficiency increases.

In addition, the intermediate member 70 is an elastically deformable member. Therefore, even if the stator 13 and the motor housing 30 have manufacturing errors, it is possible to absorb the errors by elastically deforming them. In addition, a lower end portion of the stator core 131 is pressed by the axial direction contact portion 321 in the axial direction. When the stator core 131 is attached to the motor housing cylindrical portion 32, in a state where the intermediate member 70 is elastically deformed, the lower surface of the stator core 131 is pressed by the axial direction contact portion 321. Therefore, rattling of the stator core 131 can be suppressed and the intermediate member 70 can be in contact with the stator 13 and the motor housing top plate 31.

In the blowing device A according to the embodiment, the intermediate member 70 applies a downward elastic force in the axial direction to the stator 13. The motor 10 includes a plurality of the intermediate members 70. The plurality of the intermediate members 70 are disposed with equal intervals around the central axis C, so that it is possible to apply the elastic force to the stator 13 evenly or substantially evenly. In the blowing device A, three intermediate members 70 are provided to be in contact with each of the three coils 133. However, it is not limited thereto. For example, it is possible to form one intermediate member by using the annular intermediate member 70.

In addition, it is possible to suppress the movement of the intermediate member 70 to at least one of the circumferential direction and the radial direction by providing a configuration in which at least a part of the second contact portion 72 of the intermediate member 70 is inserted into the facing recess portion 317 of the motor housing top plate 31. In addition, it is possible to use the intermediate member 70 having a longer axial length by inserting the intermediate member 70 into the facing recess portion 317. Moreover, in a case where the intermediate member 70 does not move or is difficult to move in the circumferential direction and/or the radial direction, the facing recess portion 317 is omitted and the second contact portion 72 of the intermediate member 70 may be in contact with the flat or curved top plate facing portion 314. With such a configuration, a step of forming the facing recess portion 317 can be omitted and it is possible to save time and labor required for manufacturing of the motor housing 30. In addition, it is not limited to the facing recess portion 317 and may be configured to include a plurality of projected portions which protrude from the top plate facing portion 314 and are in contact with the side surface of the intermediate member 70.

Next, the impeller 20 will be described with reference to the drawings. Fig. 8 is a perspective view of the impeller. The impeller 20 is a so-called mixed flow impeller formed of a resin molded article and has a hub portion 21 and a plurality of moving blades 22. The impeller 20 is formed of a resin called engineering plastic. The engineering plastic is a resin of which mechanical properties such as strength and heat resistance are superior to other resins. Moreover, the impeller 20 may be formed of a material such as metal. A diameter of the hub portion 21 increases as it goes downwardly. In other words, the impeller 20 has the hub portion 21 of which the diameter increases as it goes downwardly. That is, the hub portion 21 gradually expands downwardly.

The hub portion 21 includes the lower surface recess portion 211 and the boss portion 212. The lower surface recess portion 211 is recessed upwardly in the axial direction. A hole portion 213 into which the shaft 11 of the motor 10 is press-fitted is provided at a center (on the central axis C) of the boss portion 212. Therefore, the boss portion 212 and the shaft 11 are connected and the impeller 20 rotates about the central axis C.

The plurality of the moving blades 22 are juxtaposed in the circumferential direction on an outer surface 214 of the hub portion 21. That is, the impeller 20 includes the plurality of the moving blades 22 disposed in the circumferential direction. In the embodiment, the moving blades 22 are juxtaposed in the circumferential direction on the outer surface 214 of the hub portion 21 at predetermined intervals and are integrally molded with the hub portion 21. An upper portion of the moving blade 22 is disposed forward of a lower portion in the rotation direction R. That is, the moving blade 22 is inclined with respect to the central axis C. The impeller 20 has the hub portion 21 having a larger diameter as it goes downwardly and the plurality of the moving blades 22 disposed on the outer surface 214 of the hub portion 21. The upper portion of the moving blade 22 is disposed forward of the lower portion in the rotation direction R.

The lower surface of the hub portion 21 of the impeller 20 has a first impeller inclination surface 215 and a second impeller inclination surface 216. The first impeller inclination surface 215 is a conical surface of which an upper side in the axial direction is inclined inwardly in the radial direction. That is, the lower surface of the impeller 20 includes the first impeller inclination surface 215 inclined inwardly toward the upper side. In addition, the second impeller inclination surface 216 is a conical surface inclined outwardly toward the upper side in the axial direction on the outside of the first impeller inclination surface 215 in the radial direction. That is, the lower surface of the impeller 20 includes the second impeller inclination surface 216 inclined outwardly toward the upper side. The first impeller inclination surface 215 and the second impeller inclination surface 216 are connected at lower ends in the axial direction. That is, the lower surface of the hub portion 21 has an annular projected portion. The annular projected portion has a substantially V-shaped cross-sectional shape. When the impeller 20 is fixed to the shaft 11 of the motor 10 which is attached to the motor housing 30, the first impeller inclination surface 215 faces the first top plate inclination surface 311 in the axial direction and the second impeller inclination surface 216 faces the second top plate inclination surface 312 in the axial direction. Details of the configuration will be described later.

Since the lower surface recess portion 211 of the hub portion 21 of the impeller 20 is provided, it is possible to reduce the weight of the hub portion 21. The weight of the impeller 20 that is the rotation portion is reduced, so that it is possible to reduce power consumption and make easy to rotate the impeller 20 at a high speed. In addition, it is possible to suppress sink when the impeller 20 is molded.

Next, the blower housing 40 will be described. The blower housing 40 surrounds the outside of the motor housing 30 in the radial direction with a gap therebetween. The blower housing 40 includes the impeller cover 41 and the lower cover 42.

The impeller cover 41 is disposed at least on the outside of the impeller 20 in the radial direction. The impeller cover 41 serves as a guide for directing the flow of the airflow S generated by the rotation of the impeller 20 in the axial direction. The impeller cover 41 includes the intake port 43 that opens in the vertical direction (axial direction). In addition, the intake port 43 includes a bell mouth 431 which bends inwardly from an upper end and extends downwardly. Therefore, the diameter of the intake port 43 smoothly decreases from the upper side to the lower side. The impeller cover 41 includes the bell mouth 431 in the intake port 43, so that it is possible to smoothly draw the air. Therefore, an amount of the air drawing from the intake port 43 during the rotation of the impeller 20 increases. It is possible to increase the air blowing efficiency of the blowing device A by that much.

In the blowing device A of the embodiment, the impeller cover 41 is fixed to the lower cover 42. As a fixing method, for example, a projected portion is provided on the outer surface of the lower cover 42, and a beam portion, which extends downwardly in the axial direction to the impeller cover 41 and includes a recess portion that is recessed outwardly in the radial direction on the inner surface of a tip side, is provided. When the impeller cover 41 is moved in the axial direction toward the lower cover 42, the beam portion is bent and the projected portion of the lower cover 42 is inserted into the recess portion of the beam portion of the impeller cover 41 to fix. Moreover, the fixing method, is not limited thereto and it is possible to widely adopt a fixing method capable of suppressing movement in the axial direction and the circumferential direction. It is preferable that it can be positioned in the circumferential direction and can be easily attached and detached.

The lower cover 42 is cylindrical in a cross section and extends in the axial direction. The lower cover 42 is disposed on the outside of the motor housing 30 in the radial direction. That is, the lower cover 42 is disposed with a gap from the motor housing 30 in the radial direction. The plurality of the stationary blades 33 are juxtaposed in the gap between the lower cover 42 and the motor housing 30 with equal intervals in the circumferential direction. The plurality of the stationary blades 33 are in contact with the outer surface of the motor housing 30 in the radial direction.

Moreover, the contact between the stationary blade 33 and the motor housing 30 includes not only a case of being contact with another member but also a case of being formed by integral molding. In addition, the stationary blades 33 are disposed on the outer surface of the motor housing 30 in the radial direction with equal intervals in the circumferential direction.

In the motor 10, heat is generated from the coil 133 and the surrounding thereof with the rotation. The heat is transmitted to the motor housing 30. The stationary blades 33 protruding outwardly are provided on the outer peripheral surface 300 of the motor housing 30 and the stationary blades 33 are disposed on the inside of the flow path 60. Therefore, the stationary blades 33 also serve as radiation fins for rectifying the airflow S and for releasing the heat of the motor housing 30 to the outside. Therefore, the efficiency for cooling the blowing device A due to the heat generated in the coil 133 and in the vicinity thereof increases.

Moreover, in the blowing device A of the embodiment, the motor housing 30 and the lower cover 42 are formed by integral molding of resin. The upper end portion of the lower cover 42 includes a penetrating portion 421 at a position overlapping the top plate recess portion 313 of the top plate upper surface 310 of the motor housing top plate 31 of the motor housing 30 in the radial direction. The penetrating portion 421 is a rectangular notch. That is, the penetrating portion 421 penetrating in the radial direction is formed at a portion overlapping the top plate recess portion 313 in the radial direction in the blower housing 40 (lower cover 42).

The lower cover 42 includes openings at the upper end portion and the lower end portion. The upper end portion of the lower cover 42 is connected to the lower end portion of the impeller cover 41. The lower end portion of the impeller cover 41 is inserted into the inside of the lower cover 42. The inner surface of the impeller cover 41 continues smoothly, for example, differentiably with the inner surface of the lower cover 42. Therefore, the inner surface of the blower housing 40 is smoothed to suppress disturbance of the airflow S.

In the blowing device A of the embodiment, the motor housing 30 and the lower cover 42 are integrally molded, but are not limited thereto. For example, the motor housing 30 and the lower cover 42 may be formed as separate members. In this case, in a state where the impeller 20 is attached to the motor 10 which is attached to the motor housing 30, a rotational balance of the impeller 20 is adjusted. Thereafter, since the lower cover 42 can be attached, the penetrating portion 421 of the lower cover 42 may be omitted. In addition, in a case where the lower cover 42 is formed as a separate body from the motor housing 30, the impeller cover 41 and the lower cover 42 may be integrated.

Fig. 9 is an enlarged sectional view of a cross section (cross section including the central axis C) along the radial direction of the motor housing 30 and a circumferential portion of the impeller 20. When the impeller 20 is fixed to the shaft 11 of the motor 10 which is attached to the motor housing 30, the first impeller inclination surface 215 faces the first top plate inclination surface 311 in the axial direction and the second impeller inclination surface 216 faces the second top plate inclination surface 312 in the axial direction. That is, the first impeller inclination surface 215 and the first top plate inclination surface 311 face each other with a gap therebetween in the radial direction. In addition, the second impeller inclination surface 216 and the second top plate inclination surface 312 face each other with a gap therebetween in the radial direction.

An end portion on the inside in the radial direction of the first top plate inclination surface 311 of the motor housing 30 is positioned above the outer edge in the radial direction of the first impeller inclination surface 215 of the impeller 20 in the axial direction. In addition, the outer edge in the radial direction of the second top plate inclination surface 312 is positioned above the end portion on the inside in the radial direction of the second impeller inclination surface 216 of the impeller 20 in the axial direction. That is, the annular projected portion configured of the first impeller inclination surface 215 and the second impeller inclination surface 216 of the impeller 20 is disposed on the inside of the annular recess portion configured of the first top plate inclination surface 311 and the second top plate inclination surface 312 of the motor housing top plate 31.

Moreover, in the blowing device A of the embodiment, a distance D1 of the interval between the second top plate inclination surface 312 and the second impeller inclination surface 216 is the same at the outer end portion in the radial direction and the inner end portion in the radial direction. Moreover, the "same" includes strictly the same case as well as the substantially same case.

A distance D2 of the interval between the first impeller inclination surface 215 and the first top plate inclination surface 311 is smaller than the distance D1 of the interval between the second impeller inclination surface 216 and the second top plate inclination surface 312. In addition, the end portion on the inside of the first top plate inclination surface 311 in the circumferential direction is disposed at a position higher in the axial direction than the end portion on the outside of the second top plate inclination surface 312 in the radial direction. Moreover, the distance D2 of the interval between the first impeller inclination surface 215 and the first top plate inclination surface 311 may be larger than the distance D1 of the interval between the second impeller inclination surface 216 and the second top plate inclination surface 312.

As described above, the projected portion formed on the lower surface of the impeller 20 that is the rotation body is disposed on the inside of the recess portion formed in the top plate upper surface 310 of the motor housing top plate 31 facing the lower surface of the impeller 20 with an interval. In this case, a minimum value of the interval between the motor housing 30 and the impeller 20 is smaller than a minimum value of the interval between the motor housing 30 and the impeller cover 41.

An axial labyrinth is formed between the impeller 20 and the motor housing top plate 31. That is, a labyrinth mechanism with a narrow gap can be realized. The axial labyrinth is formed, so that the flow of the air is unlikely to occur. Therefore, this makes it difficult for the airflow S generated by the impeller 20 to flow between the impeller 20 and the motor housing 30, so that it is easy to maintain the air blowing efficiency. In addition, since the force to the impeller 20 due to the airflow S flowing between the impeller 20 and the motor housing 30 hardly acts, the rotation of the impeller 20 is stabilized.

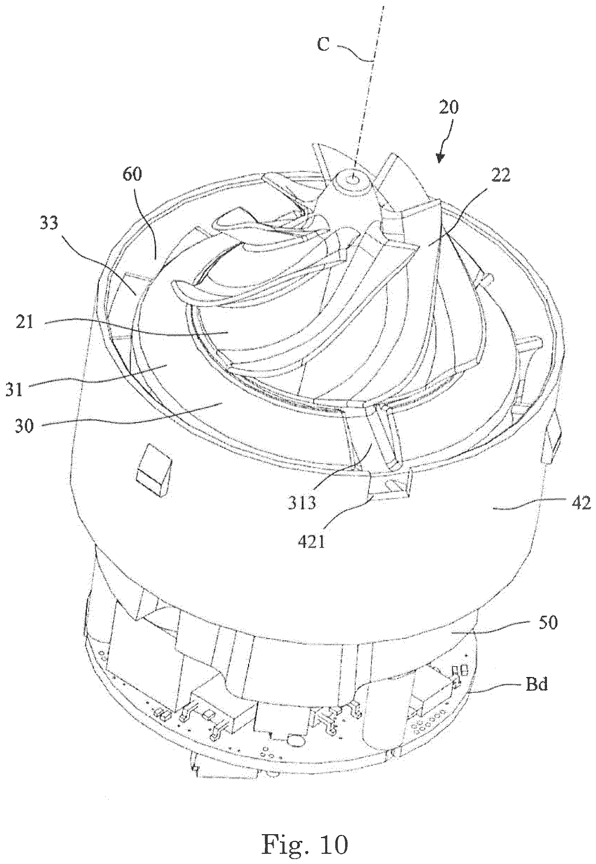

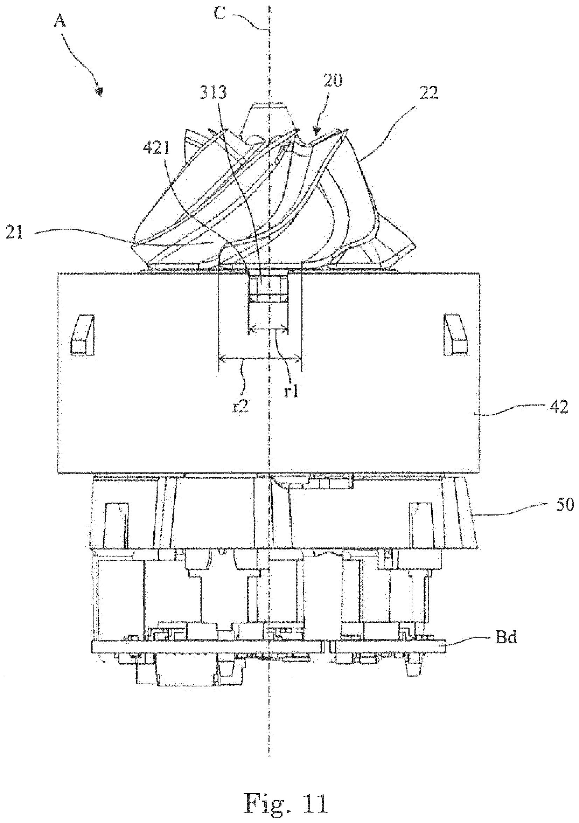

Fig. 10 is a perspective view of the blowing device in a state where the impeller cover is removed. Fig. 11 is s side view of the blowing device illustrated in Fig. 10. As illustrated in Figs. 10 and 11, the top plate upper surface 310 of the motor housing top plate 31 is provided with the top plate recess portion 313 which is recessed downwardly in the axial direction. The top plate recess portion 313 is a rectangular recessed groove having a bottom surface as viewed in the radial direction. That is, the top plate recess portion 313, which extends from the outer edge in the radial direction to the inside in the radial direction of the motor housing top plate 31 and is recessed downwardly, is formed on an upper surface 310 of the motor housing top plate 31. Therefore, as described later, a tool TL can be inserted into the top plate recess portion 313 and, even in a state where the impeller 20 is fixed to the shaft 11, the rotational balance of the impeller 20 can be easily corrected.

A length r1 of the top plate recess portion 313 in the circumferential direction is shorter than an interval r2 of the lower end portions of the moving blades 22 of the impeller 20 in the circumferential direction. That is, the length r1 of the top plate recess portion 313 in the circumferential direction is shorter than a length r2 in the circumferential direction of the lower end portion of the moving blade 22. As described above, the airflow S generated by the rotation of the impeller 20 is unlikely to disturb by narrowing a width of the top plate recess portion 313. Therefore, it is possible to decrease the air blowing efficiency of the blowing device A. Moreover, a plurality of the top plate recess portions 313 may be formed in the motor housing top plate 31 with equal intervals in the circumferential direction. Therefore, the airflow in the vicinity of the outer edge of the motor housing top plate 31 can be brought closer to the central axis C symmetrically, so that it is possible to suppress the occurrence of the turbulent flow in the vicinity of the outer edge of the motor housing top plate 31.

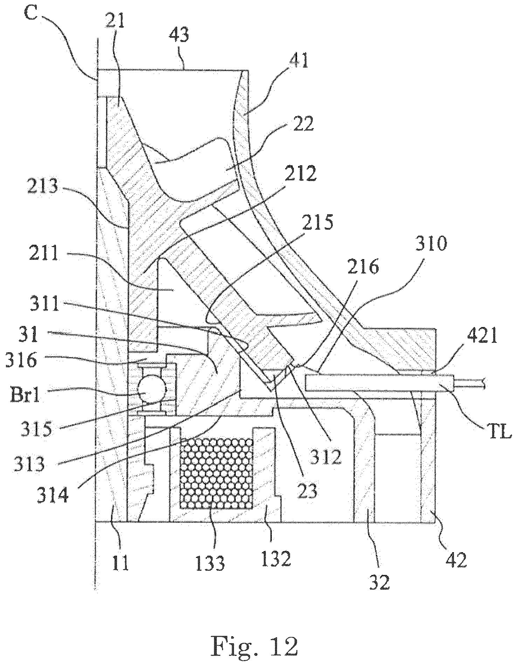

Fig. 12 is a schematic sectional view of a state where balance adjustment of the impeller is performed. As illustrated in Fig. 12, the tool TL penetrates the penetrating portion 421 of the lower cover 42 from the outside into the inside of the lower cover 42. The penetrated tool TL is inserted into the top plate recess portion 313. As illustrated in Fig. 12, the bottom surface of the top plate recess portion 313 is positioned below the first top plate inclination surface 311 and the second top plate inclination surface 312 in the axial direction. Therefore, the tool TL inserted into the top plate recess portion 313 is positioned below the lower surface of the hub portion 21 of the impeller 20.

As described above, a notch portion 23, from which a thick thickness of the hub portion 21 is removed by cutting the lower surface of the hub portion 21 of the impeller 20 by the tool TL, is formed. It is possible to adjust the weight balance of the hub portion 21 in the circumferential direction by forming the notch portion 23. Therefore, it is possible to suppress that the rotation of the impeller 20 is unbalanced. In addition, since the impeller 20 is made of a resin, it is easy to cut with the tool TL and to adjust the rotational balance. That is, the notch portion 23 which is recessed from other portions in the circumferential direction is formed in the outer edge portion or the lower surface of the impeller.

The lower surface of the hub portion 21 of the impeller 20 is positioned at the outermost position in the radial direction in the hub portion 21. When the weight of the lower surface of the hub portion 21 changes, the rotation (inertia force) of the impeller 20 tends to change. Therefore, it is possible to optimize the rotational balance of the impeller 20 with a small cutting amount by forming the notch portion 23 by cutting the lower surface of the hub portion 21. Moreover, the notch portion 23 is not limited to the lower surface of the impeller 20 and may be formed at a part of the outer edge of the impeller 20. That is, the notch portion 23 is formed at a part of the outer edge of the impeller 20. Therefore, it is possible to efficiently correct the rotational balance of the impeller 20 by cutting outside of the impeller 20 in the radial direction as much as possible.

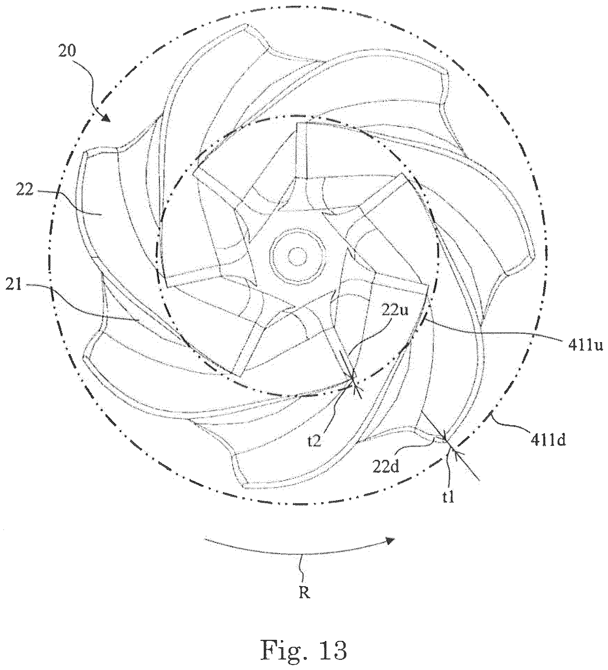

Fig. 13 is a plan view of the impeller. In Fig. 13, in an inner peripheral surface 411 of the impeller cover 41, a portion at which an interval with the upper end portion 22u of the moving blade 22 in the axial direction is minimized is illustrated by a two-dot chain line as 411u. In addition, in the inner peripheral surface 411 of the impeller cover 41, a portion at which an interval with a lower end portion 22d of the moving blade 22 in the axial direction is minimized is illustrated by a two-dot chain line as 411d.

Normally, in the blowing device, the smaller the interval between the moving blade 22 of the impeller 20 and the inner peripheral surface 411 of the impeller cover 41, the higher the air blowing efficiency. However, in a case where the interval between the moving blade 22 and the inner peripheral surface 411 is not appropriate, the air blowing efficiency may be lowered. Therefore, it is preferable that the interval between the moving blade 22 and the inner peripheral surface 411 is appropriate.

When the impeller 20 rotates, a centrifugal force acts on the hub portion 21 and the moving blade 22. In the hub portion 21, the lower side in the axial direction has a larger diameter than that of the upper side. Therefore, the centrifugal force in the outer edge in the radial direction differs between the upper side and the lower side of the impeller 20. Since the centrifugal force is different, an amount of deformation due to the centrifugal force also varies. Since the outer edge of the moving blade 22 in the radial direction is farther from the central axis C on the lower side than the upper side, the centrifugal force of the lower side is larger than that of the upper side. That is, the amount of deformation to the outside of the moving blade 22 in the radial direction during the rotation of the impeller 20 is larger on the lower side than on the upper side.

The hub portion 21 expands larger on the lower portion than on the upper portion. Therefore, the amount of deformation of the lower portion of the hub portion 21 is larger than that of the upper side thereof. Therefore, the lower surface recess portion 211 is provided on the lower surface of the hub portion 21, the hub portion 21 is thin in the radial direction and is easily deformed by the centrifugal force. The lower portion of the hub portion 21 has a conical shape. Therefore, the lower portion of the hub portion 21 is deformed outwardly and upwardly by the rotation of the impeller 20. Therefore, the lower end portion 22d of the moving blade 22 is deformed outwardly in the radial direction and upwardly. In addition, the upper end portion 22u of the moving blade 22 is deformed outwardly in the radial direction and downwardly.

Taking together the above, when the impeller 20 rotates, that is, the blowing device A performs an air blowing operation, the amount of deformation of the moving blades 22 of the impeller 20 in the circumferential direction is larger at the lower end portion 22d in the axial direction than at the upper end portion 22u in the axial direction.

In addition, the inner peripheral surface 411 (see Fig. 3) of the impeller cover 41 has a shape expanding outwardly toward the lower side in the axial direction. Therefore, the upper end portion 22u of the moving blade 22 is deformed in a direction (see Fig. 3) along the inner peripheral surface 411 of the impeller cover 41. On the other hand, the lower end portion 22d of the moving blade 22 is deformed in a direction (see Fig. 3) intersecting the inner peripheral surface 411 of the impeller cover 41. Therefore, the interval between the moving blade 22 and the inner peripheral surface 411 tends to narrow due to deformation caused by the centrifugal force during the rotation of the impeller 20.

In the blowing device A, a minimum value t1 of the gap between the lower end portion 22d of the moving blade 22 and the inner peripheral surface 411 of the impeller cover 41 is larger than a minimum value t2 of the gap between the upper end portion 22u of the moving blade 22 and the impeller cover 411u of the impeller cover 41. Therefore, even in a case where the impeller 20 rotates at a high speed, it is possible to appropriately maintain the gap between the moving blade 22 and the inner peripheral surface 411 of the impeller cover 41. Therefore, it is possible to stably and smoothly rotate the impeller 20.

The cleaner 100 includes the blowing device A. In the cleaner 100 having the configuration described above, when the motor 10 of the blowing device A is driven, the impeller 20 rotates in the rotation direction R around the central axis C. Therefore, the air containing trash such as dust on the floor surface F circulates through the suction nozzle 110, the suction pipe 107, the intake portion 103 (see Fig. 1), the dust collecting portion, and the filter in order. The air passing through the filter is drawn in the inside of the blower housing 40 via the intake port 43 of the blowing device A. In this case, an amount of the air which is drawn in from the intake port 43 is increased by the bell mouth 431 and the air is smoothly guided between the adjacent moving blades 22. Therefore, it is possible to improve the air blowing efficiency of the blowing device A. The cleaner 100 includes the blowing device A which is described above. Therefore, it is possible to realize the cleaner 100 including the blowing device A capable of eliminating imbalance of the rotation portion while maintaining the rotation efficiency.

The air drawn in the inside of the impeller cover 41 circulates through between the adjacent moving blades 22 and is accelerated outwardly in the radial direction and downwardly by the rotating impeller 20. The air which is accelerated outwardly in the radial direction and downwardly is drawn out downwardly from the impeller 20. The air which is drawn out downwardly from the impeller 20 flows through the flow path 60 of the gap between the motor housing 30 and the lower cover 42. The air flowing into the flow path 60 circulates through between the stationary blades 33 adjacent in the circumferential direction.

The airflow S passing through the lower end of the stationary blades 33 is exhausted to the outside of the blower housing 40 via the exhaust port 61. The airflow S exhausted to the outside of the blower housing 40 circulates through the air passage in the casing 102 of the cleaner 100 and is exhausted from the exhaust portion 104 (see Fig. 1) to the outside of the casing 102. Therefore, the cleaner 100 can clean the floor surface F.

In the motor 10, the coil 133 and the stator core 131 generate heat due to energization to the coil 133. The first contact portion 71 of the intermediate member 70 is in contact with the coil 133, the second contact portion 72 is inserted into the facing recess portion 317, and the second contact portion 72 is in contact with the motor housing top plate 31. Therefore, the intermediate member 70 transmits the heat generated by the coil 133 and the stator core 131 to the motor housing top plate 31. The motor housing top plate 31 is integrally formed with the motor housing cylindrical portion 32 and the airflow S generated by the impeller 20 flows through the outer surface of the motor housing cylindrical portion 32. In addition, the plurality of the stationary blades 33 integrally formed with the outer surface of the motor housing cylindrical portion 32 are provided on the inside of the flow path 60 through which the airflow S flows. Therefore, the surface area with which the airflow S is in contact increases and a heat radiation efficiency increases. Therefore, it is possible to decrease the temperature of the motor 10 and to suppress the decrease in the efficiency due to the heat of the motor 10 by providing the intermediate member 70. As a result, it is possible to suppress the decrease in the air blowing efficiency of the blowing device A.

In addition, the annular projected portion including the first impeller inclination surface 215 and the second impeller inclination surface 216 is provided on the lower surface of the hub portion 21, and the annular groove portion including the first top plate inclination surface 311 and the second top plate inclination surface 312, and recessed downwardly is provided on the top plate upper surface 310 of the motor housing top plate 31. At least a part of the projected portion of the impeller is accommodated in the groove portion. Therefore, it is possible to prevent the airflow S circulating through the flow path 60 from flowing through the inside (see Fig. 3) of the impeller 20 while suppressing an increase in size of the blowing device A in the axial direction. That is, a labyrinth effect is exerted. Therefore, it is possible to improve the air blowing efficiency of the blowing device A.

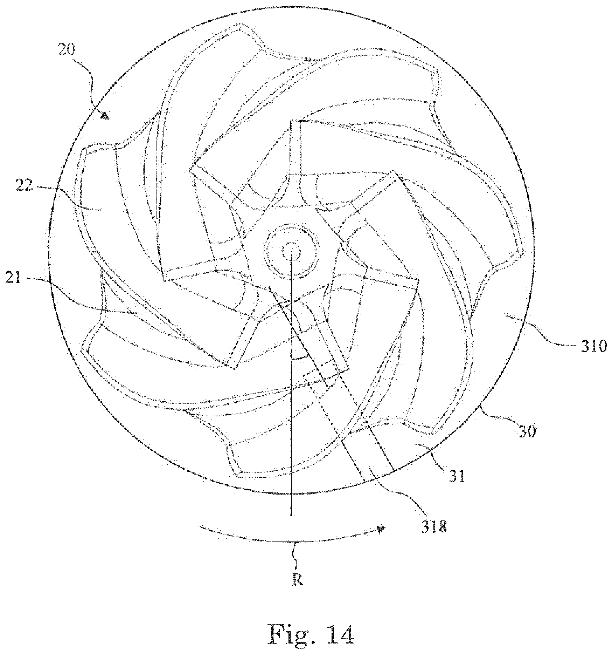

Fig. 14 is a plan view illustrating a modification example of a top plate recess portion. As illustrated in Fig. 14, similar to the top plate recess portion 313, a top plate recess portion 318 is recessed downwardly from the top plate upper surface 310. In addition, the top plate recess portion 318 extends outwardly from the inside in the radial direction. The inside of the top plate recess portion 318 in the radial direction is disposed backwardly in the rotation direction of the impeller 20 from the outside of the top plate recess portion 318 in the radial direction.

The moving blades 22 included in the impeller 20 are mixed flow blades. Therefore, the airflow generated by the rotation of the impeller 20 includes a component of the rotation direction R of the impeller 20, that is, a component of the circumferential direction. The airflow in Fig. 14 includes a component facing backwardly of the rotation direction R of the impeller 20. That is, the airflow flows downwardly in the axial direction and flows outwardly in the radial direction and backwardly in the rotation direction of the impeller 20.

The inside of the top plate recess portion 318 in the radial direction is disposed backwardly in the rotation direction of the impeller 20 from the outside in the radial direction. Therefore, the airflow flows in a direction intersecting a longitudinal direction of the top plate recess portion 318. It is difficult for the airflow to flow through the top plate recess portion 318 and it is possible to suppress disturbance of the airflow by adopting such a shape.

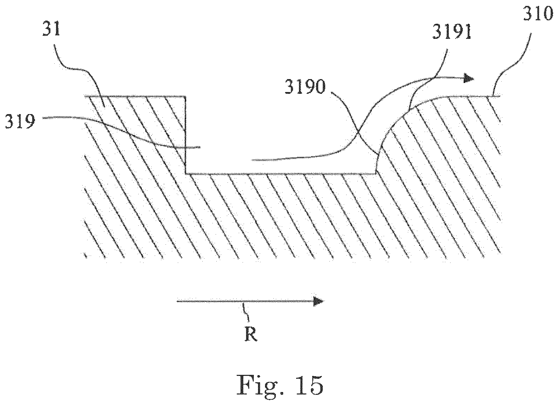

Fig. 15 is a sectional view of the top plate recess portion in the circumferential direction. The airflow flows intersecting the top plate recess portion 313 and the top plate recess portion 318 when the blowing device A is viewed from above in the axial direction. In this case, the airflow flows into the inside of the top plate recess portion 313 and the top plate recess portion 318, and disturbance of the airflow tends to occur. Therefore, a top plate recess portion 319 illustrated in Fig. 15 includes a recess portion front side surface 3190 that is a side surface of a front side of the impeller 20 of the top plate recess portion 319 in the rotation direction. The recess portion front side surface 3190 includes the front side surface enlarged portion 3191 which expands forward the impeller 20 in the rotation direction toward the upper side. The motor housing top plate 31 includes the recess portion front side surface 3190 that is the side surface of the front of the impeller in the rotation direction in the top plate recess portion 319, and an upper portion of the recess portion front side surface 3190 has the front side surface enlarged portion 3191 expanding forward of the impeller 20 in the rotation direction toward the upper side.

The front side surface enlarged portion 3191 is provided in the recess portion front side surface 3190, so that even in a case where the air is guided to the top plate recess portion 319 by the rotation of the impeller 20, since the air is smoothly exhausted along the front side surface enlarged portion 3191, it is possible to suppress that the airflow enters the inside in the radial direction. In addition, since it is possible to suppress that turbulence generates in the top plate recess portion 319 and in the vicinity thereof it is possible to suppress the decrease in the air blowing efficiency. Moreover, in Fig. 15, the front side surface enlarged portion 3191 is a curved surface projected upwardly, but is not limited thereto. For example, the front side surface enlarged portion 3191 may be a flat surface, or may be a curved surface recessed downwardly.

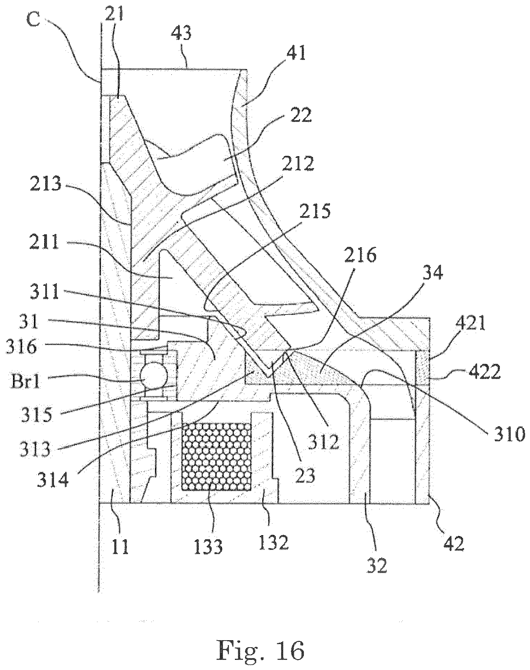

Fig. 16 is an enlarged sectional view of a cross section (cross section including the central axis C) along the radial direction of the motor housing. Fig. 16 illustrates only one side in the radial direction with respect to the central axis C. As described above, when the airflow is generated by the rotation of the impeller, if there is the top plate recess portion 313 on the top plate upper surface 310 of the motor housing top plate 31, there is a concern that the airflow is disturbed. Therefore, as illustrated in Fig. 16, an insertion member 34 may be inserted into the top plate recess portion 313 to fill the top plate recess portion 313. That is, the insertion member 34 which is inserted into the top plate recess portion 313 is provided. It is possible to suppress that the airflow flows into the top plate recess portion 313 by filling the top plate recess portion 313, so that it is possible to suppress disturbance of the airflow. The insertion member 34 has a shape that is flush with the top plate upper surface 310 of the motor housing top plate 31. That is, an upper surface of the insertion member 34 is flush with the upper surface of the motor housing top plate 31. Therefore, in a connecting portion between the upper surface of the motor housing top plate 31 and the upper surface of the insertion member 34, generation of turbulence can be reduced, so that it is possible to suppress the decrease in the air blowing efficiency. Moreover, it is preferable that the insertion member 34 has a size capable of inserting from the penetrating portion 421. Moreover, in a case of a configuration in which the lower cover 42 is capable of separating from the motor housing 30, and in a case of a configuration in which the lower cover 42 is capable of separating from the impeller cover 41, the size of the insertion member 34 is not limited to the penetrating portion 421.

In addition, the penetrating portion 421 is provided in the lower cover 42. The lower cover 42 configures the flow path 60 and when the airflow leaks from the penetrating portion 421, the air blowing efficiency decreases. Therefore, outflow of the airflow is suppressed by blocking the penetrating portion 421 with a lid portion 422. Therefore, the decrease in the air blowing efficiency is suppressed.

Although the exemplary embodiments of the present invention have been described above, various modifications can be made to the embodiments within the scope of the gist of the present invention.

Exemplary embodiments of the present invention may be utilized, for example, in a blowing device and a cleaner equipped with the same.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope and spirit of the present disclosure. The scope of the present disclosure, therefore, is to be determined solely by the following claims.

## Claims

1. A blowing device (A) comprising:
an impeller (20) capable of rotating about a central axis (C) extending vertically;
a motor (10) that is disposed below the impeller (20) in a direction of the central axis (C) and configured to rotate the impeller (20); and
a motor housing (30) surrounding the motor (10),
wherein the motor housing (30) includes
a motor housing top plate (31) that expands in a direction orthogonal to the central axis (C) and faces a lower surface of the impeller (20) in an axial direction, and
a motor housing cylindrical portion (32) that extends downwardly in the axial direction from an outer edge of the motor housing top plate (31) in a radial direction, and
wherein a top plate recess portion (313), which extends from the outer edge of the motor housing top plate (31) in the radial direction to an inside in the radial direction and is recessed downwardly, is formed on an upper surface of the motor housing top plate (31).

2. The blowing device (A) according to Claim 1,
wherein a notch portion (23), which is recessed from other portions in a circumferential direction, is formed on an outer edge portion or a lower surface of the impeller (20).

3. The blowing device (A) according to Claim 2,
wherein the notch portion (23) is formed in a part of the outer edge of the impeller (20).

4. The blowing device (A) according to any one of Claims 1 to 3,
wherein the lower surface of the impeller (20) includes a first impeller inclination surface (215) which is inclined inwardly toward an upper side,
wherein the upper surface of the motor housing top plate (31) includes a first top plate inclination surface (311) which is inclined inwardly toward the upper side, and
wherein the first impeller inclination surface (215) and the first top plate inclination surface (311) face each other with a gap therebetween in the radial direction.

5. The blowing device (A) according to any one of Claims 1 to 4,
wherein the lower surface of the impeller (20) includes a second impeller inclination surface (216) which is inclined outwardly toward the upper side,
wherein the upper surface of the top plate (31) includes a second top plate inclination surface (312) which is inclined outwardly toward the upper side, and
wherein the second impeller inclination surface (216) and the second top plate inclination surface (312) face each other with a gap therebetween in the radial direction.

6. The blowing device (A) according to any one of Claims 1 to 5,
wherein the motor housing (30) includes a recess portion front side surface (3190) which is a side surface on a front side of the impeller (20) in a rotation direction (R) in the top plate recess portion (313), and
wherein an upper portion of the recess portion front side surface (3190) has a front side surface enlarged portion (3191) which expands forward the impeller (20) in the rotation direction (R) toward the upper side.

7. The blowing device (A) according to any one of Claims 1 to 6,
wherein the impeller (20) includes a plurality of moving blades (22) which are disposed in the circumferential direction, and
wherein a length (r1) of the top plate recess portion (313) in the circumferential direction is shorter than an interval between lower end portions in the moving blades (22) in the circumferential direction.

8. The blowing device (A) according to any one of Claims 1 to 7,
wherein a plurality of the top plate recess portions (313) are formed with equal intervals in the circumferential direction in the motor housing top plate (31).

9. The blowing device (A) according to any one of Claims 1 to 8,
wherein an inside of the top plate recess portion (313) in the radial direction is disposed on a rear side of the impeller (20) in the rotation direction (R) from an outside of the top plate recess portion (313) in the radial direction.

10. The blowing device (A) according to any one of Claims 1 to 9, further comprising:
an insertion member (34) which is inserted into the top plate recess portion (313).

11. The blowing device (A) according to Claim 10,
wherein an upper surface of the insertion member (34) is flush with the upper surface of the motor housing top plate (31).

12. The blowing device (A) according to any one of Claims 1 to 11, further comprising:
a blower housing (40) surrounding an outside of the motor housing (30) in the radial direction with a gap therebetween,
wherein the blower housing (40) has a penetrating portion (421) that penetrates a portion which overlaps the top plate recess portion (313) in the radial direction.

13. A cleaner (100) comprising:
the blowing device (A) according to any one of Claims 1 to 12.
